# EUROPÄISCHE PATENTSCHRIFT

(11) **EP 0 634 345 B1**
(45) Veröffentlichungstag und Bekanntmachung des Hinweises auf die Patenterteilung: **20.05.1998**
(21) Anmeldenummer: 94110374.9
(22) Anmeldetag: 04.07.1994
(51) Int. Cl.: B65G 1/04, B65G 1/137

(54) **Lager mit integriertem Sortierbereich**
Warehouse with integrated sorting-area
Installation de stockage avec emplacement de triage intégré

(30) Priorität: 16.07.1993 DE 9310690 U
(43) Veröffentlichungstag der Anmeldung: 18.01.1995
(73) Patentinhaber: SIEMENS AKTIENGESELLSCHAFT, 80333 München (DE)
(72) Erfinder: Limmer, Gerd, Dipl.-Ing. (FH), D-90607 Rückersdorf (DE)

(56) Entgegenhaltungen:
- WO-A-90/10585
- DE-A- 2 350 615
- DE-A- 2 756 385
- DE-U- 9 201 541

## Beschreibung

Die Erfindung bezieht sich auf ein Lager mit in mehreren Ebenen angeordneten parallelen Lagerzeilen, von denen jede aus nebeneinanderliegenden Lagerplätzen für insbesondere auf Ladehilfsmitteln befindliches Ladegut besteht und innerhalb jeweils einer Lagerzeile die Lagerplätze durch eine Tiefenstaffelung zu Lagerkanälen um jeweils einen Faktor n vervielfachbar sind, wobei zwischen je zwei Lagerzeilen eine Regalgasse für ein Regalbediengerät gebildet ist und wobei zwischen zwei übereinanderliegenden Lagerebenen mindestens eine Ein- und/oder Auslagerungsebene vorgesehen ist, die im Bereich der Regalgassen Öffnungen für die Regalbediengeräte aufweist.

Bei herkömmlichen Lagersystemen ist der eigentliche Lagerbereich örtlich vom Ein- und Auslagerbereich getrennt, so daß das sortierte Lagergut unter Zurücklegung längerer Wegstrecken in den Lagerbereich verbracht werden muß. Dafür sind zusätzliche Transportmittel notwendig und, falls manuell eingelagert wird, auch zusätzliches Personal. Nicht zuletzt ist die Verbringung des Ladeguts in oder aus dem Lagerbereich zeitaufwendig.

Ein Lager der eingangs genannten Art ist aus der DE-OS 23 50 615 bekannt. Die Lagerfächer sind dabei zwar doppelttief ausgestaltet, jedoch sind Lagerkanäle mit mehr als n=2 Lagerfächern nicht vorgesehen.

Wenn ein beliebiger Zugriff auf Lagergut nicht erforderlich ist, können prinzipiell mehrere Lagerplätze hintereinander in längeren Lagerkanälen angeordnet sein, die nach dem "first-in-last-out" Prinzip bedient werden. Ein solches Lager mit langen Lagerkanälen läßt sich sehr kompakt bestücken, jedoch ist ein in manchen Fällen erforderlicher wahlfreier Zugriff auf einzelne Lagerplätze nicht ohne weiteres möglich.

Es ist daher Aufgabe der Erfindung, ein Lagersystem zu schaffen, das eine einfach realisierbare Mischform eines first-in-last-out-Lagersystems und eines Lagersystems mit wahlfreiem Zugriff darstellt.

Diese Aufgabe wird gemäß der Erfindung für ein Lager der eingangs genannten Art dadurch gelöst, daß ein Regalbediengerät von n Lagerplätzen der auf einer Seite einer Regalgasse liegenden Lagerkanäle n-1 Lagerplätze sowie einen Lagerplatz der Lagerkanäle der gegenüberliegenden Seite der Regalgasse bedient.

Die Ein- und/oder Auslagerungsebene kann dabei den gesamten Wareneingang inklusive eines Codierbereichs und eines Sortierbereichs umfassen oder auch nur einen, bzw. einen Teil dieser Bereiche. Der Umfang der Ein- und/oder Auslagerungsebene wird neben anderen Faktoren auch von der Grundfläche des Lagers abhängen. Die Ein-/Auslagerungsebene kann dabei zwischen zwei beliebigen Lagerebenen oder unter der ersten bzw. über der höchsten Lagerebene angeordnet sein. Die für den Durchgriff der Regalbediengeräte vorgesehenen Öffnungen können dabei jeweils lediglich eine Größe aufweisen, die geeignet ist, das Regalbediengerät nur an dieser Stelle durchzulassen. Sie können aber auch die gleichen Abmessungen wie die Regalgassen aufweisen.

Nach einer vorteilhaften Ausbildung der Erfindung ist die Einlagerebene als Sortierebene für Ladegut ausgeführt, wobei sich die jeweiligen Sortierendstellen im Bereich der Öffnungen der zugeordneten darüber bzw. darunterliegenden Lagerplätze befinden. Damit wird eine besonders effektive Einlagerung erreicht, da das Lagergut direkt in der Nähe der dafür bestimmten Lagerplätze bereitgestellt bzw. gesammelt wird. Das Regalbediengerät, das über die Öffnungen im Boden und/oder Deckenbereich der Ein-/Auslagerebene das bereitgestellte Lagergut für die Einlagerung aufnimmt, muß nur noch einen relativ kurzen Weg zu dem vorbestimmten Lagerplatz zurücklegen. Der Einlagervorgang ist damit weg- und zeitoptimiert gestaltet. Als Sortiersystem läßt sich vorteilhafterweise ein Kippschalensorter verwenden, wie er zum Beispiel im deutschen Gebrauchsmuster G 92 01 541.7 beschrieben ist.

Ein Ausführungsbeispiel der Erfindung wird im folgenden anhand der Zeichnung beschrieben. Dabei zeigen:
- FIG 1: eine Vorderansicht eines Lagers mit integrierter Sortierebene,
- FIG 2: eine Draufsicht auf eine Lagerebene,
- FIG 3: eine Draufsicht auf die Sortierebene.

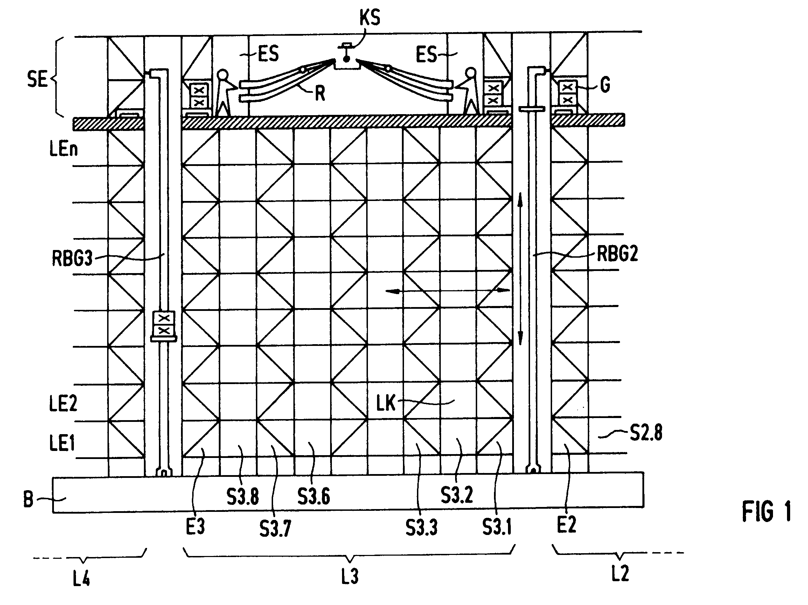

Die Schnittdarstellung gemäß FIG 1 zeigt die Vorderansicht eines Lagers mit integrierter Sortierebene. Das in selbsttragender Bauweise ausgeführte Lager besteht aus mehreren übereinander angeordneten Lagerebenen LE1-LEn. Diese sind in Lagerzeilen L2, L3, L4 angeordnet, wobei die Lagerzeilen L2 und L4 nur teilweise dargestellt sind. Zwischen den Lagerzeilen befinden sich Regalgassen, in denen jeweils ein automatisch gesteuertes Regalbediengerät RBG2, RBG3 angeordnet ist. Über der Lagerebene LEn befindet sich die Sortierebene SE. Der Boden der Sortierebene SE ist im Bereich der Regalbediengeräte RBG2, RBG3 mit Öffnungen versehen, so daß die Regalbediengeräte RBG2, RBG3 auch eine Sortierebene SE bedienen können. In der Sortierebene SE befinden sich im Bereich der Regalbediengeräte RBG2, RBG3 die Sammelstellen ES für das einzulagernde Gut. Das in diesem Ausführungsbeispiel in Gitterboxen G gegeben wird. Das einzulagernde Gut wird über ein Sortiersystem zu der jeweiligen Sammelstelle ES gebracht. Als Sortiersystem kann beispielsweise ein Kippschalensorter KS verwendet werden. Vom Regalbediengerät RBG2, RBG3 werden die Gitterboxen bzw. in Paletten der Sortierebene SE aufgenommen und zu einem Lagerplatz einer Lagerebene LE1-LEn verbracht.

Eine Sammelstelle (bzw. Beladestelle) ES kann für mehrere sortierte Güter genutzt werden. Dazu sind die Sammelstellen jeweils im Raster einer Beladestelle (z.B. Gitterbox) aufgeteilt.

Zum Zwecke einer besseren Auslastung bzw. eines höheren Füllgrades können die Endstellen in mehrere Füllkanäle unterteilt werden. Ein Beispiel einer derartig aufgeteilten Endstelle sind 2 nebeneinanderliegende Kanäle und/oder sogar eine zusätzliche Ebene darüber, die durch eine Schwenkvorrichtung anwählbar ist, so daß z.B. insgesamt 4 Sammelkanäle pro Endstelle zur Verfügung stehen.

Diese Anordnung hat folgende Vorteile:
1. Automatisches Zählen von schnellgängigen Artikeln, Wenn z.B. ein Kanal den Füllgrad erreicht hat, wird auf den nächsten freien Kanal umgeschaltet. In diesem ist jeweils ein Artikel einer bestimmten Endstelleneinrichtung zugeordnet.
2. Nutzung einer Endstelle für mehrere langsamgängige Artikel. Da jetzt mehrere Artikel (= Sortierkriterien) einer Beladestelle zugeordnet sind, müssen die artikelreinen Behälter (= Gitterboxen) mehrfach umgelagert werden. Dies ist möglich, da im Lagerbereich Einzelstellplätze mit wahlfreiem Zugriff, wie bereits beschrieben, zur Verfügung stehen.

In der Lagerebene LE1 sind die einzelnen Lagerplätze E, S exemplarisch dargestellt. Das Lager ist als "first-in-last-out"-Lager konzipiert, wobei jede Ebene LE1-LEn einer Lagerzeile L2, L3, L4 nebeneinanderliegende Lagerkanäle aufweist. In den jeweiligen Lagerkanälen wird das Lagergut in hintereinanderliegende Stellplätze S3.1-S3.8, E3 verbracht. Damit wird eine hohe Einlagerungsdichte erreicht, es ist aber kein wahlfreier Zugriff auf die zuerst eingelagerten Güter mehr möglich. Deshalb werden von einem Regalbediengerät beispielsweise vom Regalbediengerät RBG2 nicht alle Stellplätze eines Lagerkanals bedient, sondern jeweils nur n-1 Stellplätze. So werden beispielsweise vom zweiten Regalbediengerät RBG2 im exemplarisch gezeigten linken Lagerkanal der Lagerebene LE1 nur die Stellplätze S3.1-S3.8 bedient. Der Stellplatz E3 dieses Lagerkanals wird dagegen vom dritten Regalbediengerät RBG3 als Einzelstellplatz bedient. Ebenso wird der Stellplatz E2 der Lagerzeile L2 als Einzelstellplatz vom zweiten Regalbediengerät RBG2 bedient. Dadurch ist es möglich, bei ausgewählten Ladegütern einen wahlfreien Zugriff zu erreichen, indem diese in Einzelstellplätze E verbracht werden.

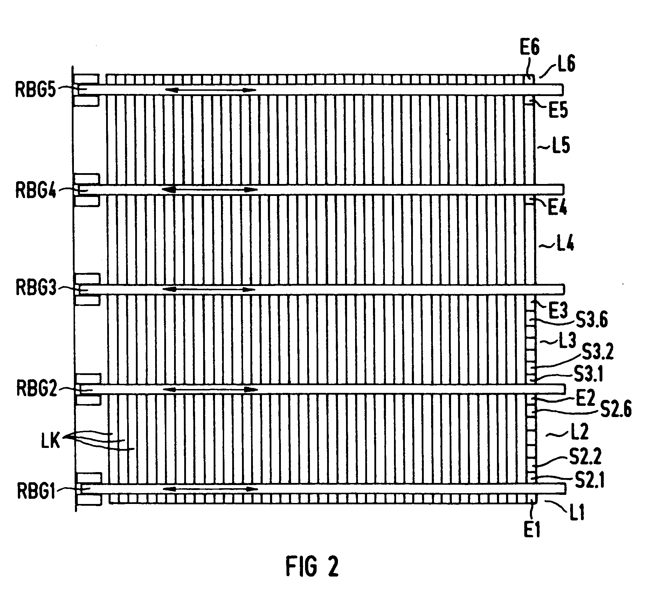

Der Aufbau des Lagers wird im folgenden anhand der Beschreibung der FIG 2 deutlicher. FIG 2 zeigt die Draufsicht auf eine Lagerebene LE1-LEn mit den Lagerzeilen L1-L6 und den in jeder Lagerzeile L1-L6 nebeneinanderliegenden Lagerkanälen LK und den Regalbediengeräten RBG1-RBG5. Es ist nochmals deutlich zu erkennen, daß die Lagerkanäle LK durchgehend ausgeführt sind, ohne Unterschied, ob es sich um einen Einzelstellplatz E oder einen der Sammelstellplätze S2.1-S2.6 oder S3.1-S3.6 handelt. Im Ausführungsbeispiel weist die Lagerzeile L6 keine Lagerkanäle mehr auf, sondern ebenfalls Einzelstellplätze E6, so daß das Regalbediengerät RBG5 die Einzelstellplätze E5 der Lagerzeile L5 und die Einzelstellplätze E6 der Lagerzeile L6 bedient.

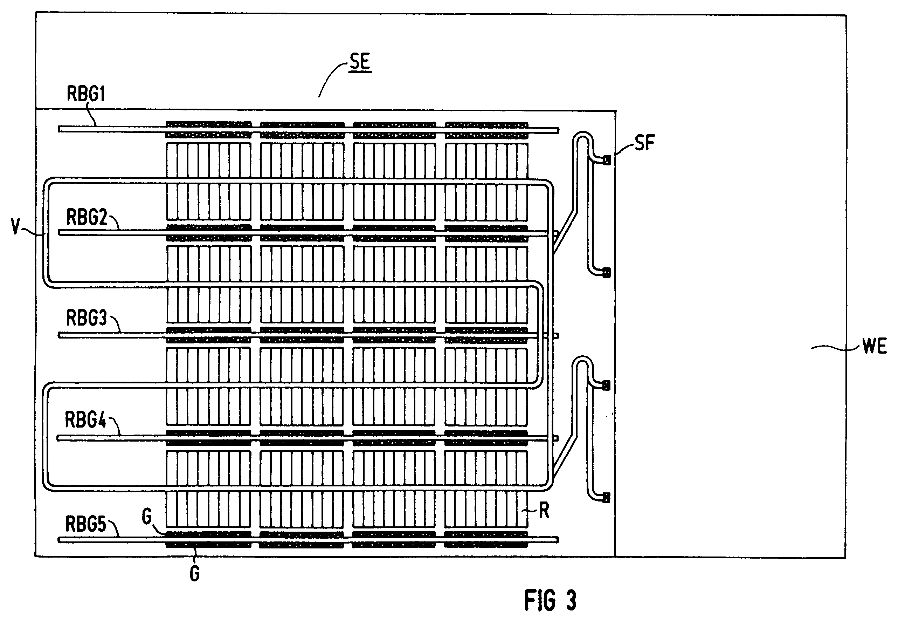

FIG 3 zeigt die Draufsicht auf die Sortierebene SE, die in diesem Ausführungsbeispiel als oberste Sortierebene auf den Lagerebenen LE1-LEn angebracht ist. Die Sortieranlage verfügt über ein mäanderförmiges Verteilersystem V, das als Schienensystem einer Kippschalensortieranlage ausgeführt sein kann. Das Lagergut wird vom Wareneingangsbereich WE, der auch in einer anderen Ebene als der Sortierebene SE angeordnet sein kann, über eine Förderanlage, beispielsweise über Senkrechtförderer SF in die Sortierebene verbracht und dort über die Kippschalensorteranlage V verteilt. Wenn das Lagergut im Wareneingangsbereich WE bereits mit einem Sortiercode versehen wurde, also beispielsweise mit einem Strichcode der das Sortierkriterium enthält, so kann über eine - nicht dargestellte - automatische Strichcode-Lesevorrichtung der Zielort des Lagergutes in der Sortierebene festgestellt werden. An den Längsabschnitten der Kippschalenverteilanlage V sind als Ausschleußmittel Kastenrutschen R angebracht, in die das Verteilgut von der jeweiligen Kippschale abgegeben wird. Am Ende dieser Rutschen R wird das Gut dann von einer Bedienperson oder einer Handhabungsvorrichtung aufgenommen und in Gitterboxen gegeben. Die Gitterbox kann dann von den Regalbediengeräten RBG1-RBG5, die ja, wie oben beschrieben, eine Durchgriffsmöglichkeit vom Lager in die Sortierebene haben, aufgenommen und in die darunter oder darüberliegenden Lagerebenen verbracht werden.

## Patentansprüche

1. Lager mit in mehreren Ebenen angeordneten parallelen Lagerzeilen (L1-L6), von denen jede aus nebeneinanderliegenden Lagerplätzen (E,S) für insbesondere auf Ladehilfsmitteln befindliches Ladegut besteht und innerhalb jeweils einer Lagerzeile die Lagerplätze durch eine Tiefenstaffelung zu Lagerkanälen um jeweils einen Faktor n vervielfachbar sind, wobei zwischen je zwei Lagerzeilen (L1-L6) eine Regalgasse für ein Regalbediengerät (RBG1 bis RBG5) gebildet ist und wobei zwischen zwei übereinanderliegenden Lagerebenen (LE1-LEn) mindestens eine Ein- und/oder Auslagerungsebene vorgesehen ist, die im Bereich der Regalgassen Öffnungen für die Regalbediengeräte (RBG1 bis RBG5) aufweist, **dadurch gekennzeichnet,** daß ein Regalbediengerät (RBG1 bis RBG5) von n Lagerplätzen (E,S) der auf einer Seite einer Regalgasse liegenden Lagerkanäle n-1 Lagerplätze (S) sowie einen Lagerplatz (E) der Lagerkanäle der gegenüberliegenden Seite der Regalgasse bedient.

2. Lager nach Anspruch 1, wobei die Einlagerebene als Sortierebene (SE) für Ladegut ausgeführt ist, wobei sich die jeweiligen Sortierendstellen (ES) im Bereich der Öffnungen der zugeordneten, darüber bzw. darunterliegenden Lagerplätze (E,S) befinden.

3. Lager nach Anspruch 2, wobei die Sortierebene (SE) eine automatische Sortieranlage, z.B. ein Kippschalen-Sortiersystem (KS), aufweist.

## Claims

1. Store with parallel storage rows (L1-L6) arranged in several planes, each storage row consisting of storage areas (E,S) adjacent to each other for material to be loaded which is located in particular on loading aids, and within a respective storage row the storage areas can be multiplied in each case by a factor n by a depth stepping to form storage channels, whereby between two respective storage rows (L1-L6) a shelf lane for a shelf control unit (RBG1 to RBG5) is formed and whereby between two storage planes (LE1-LEn) lying one on top of the other at least one storage and/or withdrawal plane is provided, which in the region of the shelf lanes has openings for the shelf control units (RBG1 to RBG5), characterized in that a shelf control unit (RBG1 to RBG5) of n storage areas (E,S) of the storage channels lying on one side of a shelf lane controls n-1 storage areas (S) and one storage area (E) of the storage channels of the opposite side of the shelf lane.

2. Store according to claim 1, whereby the storage plane is designed as a sorting plane (SE) for material to be loaded, whereby the respective end sorting points (ES) are located in the region of the openings of the associated storage areas (E,S) which lie above them or below them.

3. Store according to claim 2, whereby the sorting plane (SE) has an automatic sorting system, for example a tipping tray sorting system (KS).

## Revendications

1. Magasin comportant des rangées (L1 à L6) de stockage parallèles, qui sont montées sur plusieurs plans, dont chacune d'entre elles est constituée d'emplacements (E, S) de stockage, situés côte à côte et destinés à des produits à charger se trouvant notamment sur des moyens auxiliaires de chargement et à l'intérieur de chacune desquelles les emplacements de stockage peuvent être multipliés d'un facteur n par un étagement en profondeur en canaux de stockage, une travée pour un transélévateur (RBG1 à RBG5) étant formée entre respectivement deux rangées (L1 à L2) de stockage et au moins un plan de stockage et/ou de déstockage, qui comporte dans la zone des travées des ouvertures pour les transélévateurs (RBG1 à RBG5), étant prévus entre deux plans (LE1 à LEn) de stockage superposés, caractérisé en ce qu'un transélévateur (RBG1 à RBG5) dessert n-1 emplacements (S) de stockage de n emplacements (E, S) de stockage des canaux de stockage se trouvant d'un côté d'une travée, ainsi qu'un emplacement (E) de stockage des canaux de stockage du côté opposé de la travée.

2. Magasin suivant la revendication 1, le plan de stockage étant réalisé en plan (SE) de tri pour des produits à charger, les points (ES) d'extrémité de tri associés se trouvant dans la zone des ouvertures des emplacements (E, S) de stockage associés se trouvant au-dessus ou endessous.

3. Magasin suivant la revendication 2, le plan (SE) de tri comportant une installation de tri automatique, par exemple un système (KS) de tri à coquille basculante.
